# EUROPÄISCHE PATENTANMELDUNG

(11) **EP 4 642 010 A1**
(43) Veröffentlichungstag der Anmeldung: **29.10.2025**
(21) Anmeldenummer: 25166504.8
(22) Anmeldetag: 27.03.2025
(51) Int. Cl.: H04L 67/12, G01V 15/00

(54) **TRACKINGSYSTEM**

(30) Priorität: 25.04.2024 DE 102024111633
(71) Anmelder: Metabowerke GmbH, 72622 Nürtingen (DE)
(72) Erfinder: Witkowski, Julian, 73779 Deizisau (DE); Moersch, Christian, 73728 Esslingen (DE); Wilke, Dirk, 72582 Grabenstetten (DE)
(74) Vertreter: Lorenz & Kollegen

(57) **Zusammenfassung**

Die Erfindung betrifft ein Trackingsystem (10) zur drahtlosen Ortung eines damit verbundenen Objektes (O) mit: einer Trackingvorrichtung (12) umfassend ein Gehäuse (14) zur Aufnahme einer Übermittlungseinrichtung (S) zur drahtlosen Übermittlung von Ortungsdaten an ein externes Gerät, wobei das Gehäuse (14) der Trackingvorrichtung (12) wenigstens eine Befestigungsausnehmung (16; 18a-d) zur lösbaren Aufnahme eines Befestigungselements (S, 40) aufweist, und wenigstens einer Halteklammer (20), wobei die Halteklammer (20) lösbar mit dem Gehäuse (14) der Trackingvorrichtung (12) verbindbar ist und eine Verbindungskontur (22) aufweist, die mit einer Gegenkontur (32) eines mit dem Trackingsystem (10) zu verbindenden Objektes (O) eine formschlüssige Verbindung herzustellen vermag, derart, dass die Trackingvorrichtung (12) des Trackingsystems (10) zur drahtlosen Ortung des damit verbundenen Objektes (O) mittels der Halteklammer (20) oder mittels eines Befestigungselements (S, 40) an dem ortenden Objekt (O) lösbar befestigt werden kann.

## Beschreibung

Die Erfindung betrifft ein Trackingsystem zur drahtlosen Ortung eines damit verbundenen Objektes mit einer Trackingvorrichtung umfassend ein Gehäuse zur Aufnahme einer Übermittlungseinrichtung zur drahtlosen Übermittlung von Ortungsdaten an ein externes Gerät, wobei das Gehäuse der Trackingvorrichtung wenigstens eine Befestigungsausnehmung zur lösbaren Aufnahme eines Befestigungselements aufweist.

Aus dem Stand der Technik sind Tracker, wie Trackingvorrichtungen in verkürzter Weise auch genannt werden, in unterschiedlichen Anwendungen bekannt.

So werden beispielsweise Tracker angeboten, die münzförmige ausgebildet sind und unmittelbar in einem zu ortenden Objekt, wie einer Tasche oder einem Geldbeutel, oder in einem zusätzlichen aus Kunststoff oder Leder hergestellten Halter aufgenommen werden können, um an einem zu ortenden Objekt befestigt zu werden. Auf diese Weisen dienen derartige Tracker beispielsweise als Taschenfinder oder Schlüsselfinder, wie beispielsweise das Apple Airtag.

Weiterhin ist es auch bekannt derartige Tracker mit einer Ausnehmung an dem Gehäuse zu versehen, um diese ohne zusätzlich erforderlichen Halter an einem Schlüsselring oder dergleichen zu befestigen. Beispielsweise offenbart die EP 4175062 B1 eine derartige Lösung.

Die Druckschriften CN 2052383994 U und WO 2023279023 A1 offenbaren jeweils eine Trackingvorrichtung, die an einem Hundehalsband oder einem vergleichbaren Band befestigt werden kann.

Aus der Druckschrift CN 210630048 U ist eine Bluetooth Trackingvorrichtung bekannt, bei der ein Körper des Bluetooth Trackers auf einer Seite mittels Schrauben in einer Befestigungsbox der Trackingvorrichtung aufgenommen ist. Zusätzlich sind an und in der Befestigungsbox der Trackingvorrichtung weitere Komponenten wie ein Microlüfter und eine Antenne angebracht.

Die Druckschrift WO 2013/078291 A1 offenbart schließlich eine Trackingvorrichtung, die ein unerlaubtes Entfernen von dem zu ortenden Objekt ermittelt, mit einer Halterung mit Befestigungselementen zur Befestigung der Halterung an dem zu ortenden Objekt.

In einer Ausführungsform handelt es sich bei den Befestigungselementen um Schrauben, wie z. B. selbstschneidende Blechschrauben, die durch Löcher in der Halterung und in eine Oberfläche des Objekts eingeführt werden. Alternativ können die Befestigungselemente auch Bolzen sein, die durch die Löcher und durch Löcher in der Oberfläche des Objekts geführt und durch Muttern auf der gegenüberliegenden Seite der Befestigungsstruktur am Objekt gesichert werden. Das Gehäuse der Trackingvorrichtung ist seinerseits mit Hilfe von Befestigungsmitteln an der Halterung befestigt. In einer Ausführungsform sind die Befestigungselemente ebenfalls als Schrauben ausgebildet, die in die Gewindelöcher in der Halterung eingeschraubt werden. In einer anderen Ausführungsform kann das Gehäuse mit Hilfe eines abziehbaren Klebepads an der Montagehalterung befestigt werden.

In einem montierten Zustand der Trackingvorrichtung deckt das Gehäuse die Befestigungsmittel ab, mit denen die Halterung an der Oberfläche des Objekts befestigt wird, wenn das Gehäuse an der Halterung befestigt ist, derart dass die Befestigungselemente daher für jedes Werkzeug, das zu ihrer Entfernung verwendet werden könnte, unzugänglich sind. Dementsprechend verhindert das Vorhandensein des Gehäuses die Entfernung der Halterung von der Oberfläche des Objekts. Um Zugang zu den Befestigungselementen zu erhalten, um die Halterung von der Anlage zu entfernen, muss somit zunächst das Gehäuse von der Halterung abgenommen werden.

Eine zusätzliche Anlageverfolgungsvorrichtung beispielsweise mit einem GPS-Modul (Global Positioning System) ermöglicht die Bestimmung der Standortkoordinaten der Trackingvorrichtung auf der Grundlage der von GPS-Satelliten empfangenen Zeitsignale. Ein Steuergerät, das Mikroprozessor-Hardware und -Firmware enthält, ist mit dem GPS-Modul und einem drahtlosen Modem verbunden und steuert den Betrieb der Trackingvorrichtung. Eine Batterie versorgt das GPS-Modul, das Steuergerät und das drahtlose Modem mit Strom.

Ein Schalter kann weiter mit dem Steuergerät elektrisch verbunden sein und ausgelöst werden bzw. geschaltet werden, sobald das Gehäuse von der Halterung gelöst wird. Auf diese Weise kann ein unerlaubtes Abnehmen der Trackingvorrichtung von der Halterung und dem zu ortenden Objekt ermittelt werden.

Trackingvorrichtungen sind auch in Zusammenhang mit Elektrowerkzeugmaschinen und damit genutzten Akkupacks bekannt.

So offenbart beispielsweise die EP 3189943 A1 eine Übertragungseinrichtung als Bestandteil eines Stapelbehälters oder zur Verwendung in einem Stapelbehälter, wobei ein Behälterkorpus des Stapelbehälters eine durch eine Bodenwand an seiner Unterseite und von der Bodenwand zu seiner Oberseite hin abstehende Umfangswände begrenzte Stauaufnahme zum Aufnehmen eines Behältereinsatzes aufweist, welcher eine Transportaufnahme zum Transportieren einer elektrischen oder pneumatischen Hand-Werkzeugmaschine oder eines Zubehörteils einer derartigen Hand-Werkzeugmaschine aufweist, wobei der Stapelbehälter zur Bildung einer Stapelanordnung mit mindestens einem weiteren, insbesondere als Stapelbehälter ausgestalteten, Stapelelement ausgestaltet ist, auf das der Stapelbehälter mit seiner Unterseite aufstapelbar oder das auf die Oberseite des Stapelbehälters aufstapelbar ist, wobei die Übertragungseinrichtung zur Übertragung von Daten und/oder Energie insbesondere über eine Leitungsanordnung miteinander verbundene Busschnittstellen aufweist, die im aufeinandergestapelten Zustand der Stapelbehälter eine Busverbindung zwischen den Stapelbehältern bilden.

Ein Grundgedanke sieht dabei vor, dass die Komponenten der Übertragungseinrichtung nicht Bestandteile des Stapelbehälters sind, sondern mit dem Behältereinsatz ein Übertragungsmodul bilden. Somit kann der Stapelbehälter sozusagen als einfacher Tragebehälter oder Hohlformkörper ausgestaltet sein, der keine elektrischen Komponenten braucht oder jedenfalls die Busschnittstellen nicht selbst aufweist. Die elektrische Ausstattung oder die Ausstattung mit den Busschnittstellen wird durch das Übertragungsmodul für den Stapelbehälter bereitgestellt. Somit können einfache, sozusagen konventionelle Stapelbehälter verwendet werden, die durch den Behältereinsatz mit der Übertragungseinrichtung zur Herstellung der Busverbindung sozusagen ertüchtigt werden.

Vorteilhaft ist auch eine Trackingvorrichtung als Bestandteil der Übertragungseinrichtung und/oder des Behältereinsatzes und/oder des Stapelbehälters, wobei die Ortungseinrichtung zur drahtlosen Ortung des Stapelbehälters oder der darin aufgenommenen Hand-Werkzeugmaschine oder deren Zubehörteil anhand eines Bediengeräts vorgesehen ist. Auch hier ist es wiederum vorteilhaft, dass die Trackingvorrichtung nicht unbedingt einen Bestandteil des Stapelbehälters bilden muss, sondern beispielsweise am Behältereinsatz oder der Übertragungseinrichtung vorgesehen ist.

Eine weitere Trackingvorrichtung für ein elektrisches Handwerkzeug ist in der Anmeldung US 2019/0160646 A1 offenbart. Diese zeigt einen Clip mit einer integrierten Trackingvorrichtung, wobei der Clip im wesentlichen U-förmig mit zwei Haltearmen ausgebildet ist, wobei an wenigstens einem Arm eine Befestigungsaufnahme zur Aufnahme einer Befestigungsschraube vorgesehen ist. Die Haltearme des Clips definieren eine Aufnahmeöffnung, in der das elektrische Handwerkzeug in einem befestigten Zustand des Clips an dem elektrischen Handwerkzeug aufgenommen ist. In einem befestigten Zustand des Clips an dem elektrischen Handwerkzeug fluchtet die wenigstens eine Befestigungsaufnahme des einen Arms mit einer Befestigungsaufnahme an dem elektrischen Handwerkzeug.

Aus der EP 4 336 005 A1 sind schließlich unterschiedliche Ausgestaltungen einer clipartigen Befestigungsmöglichkeit für Sportaccessoires offenbart.

Im Lichte des bekannten Stands der Technik besteht eine Aufgabe der vorliegenden Erfindung darin, ein Trackingsystem mit einer Trackingvorrichtung bereitzustellen, die einen multifunktionalen Einsatz und eine sichere Befestigung an einem zu ortenden Objekt ermöglicht.

Diese Aufgabe wird durch ein Trackingsystem mit den Merkmalen des Anspruchs 1 gelöst.

Demgemäß umfasst das Trackingsystem zur drahtlosen Ortung eines damit verbundenen Objekts eine Trackingsvorrichtung umfassend ein Gehäuse zur Aufnahme einer Übermittlungseinrichtung zur drahtlosen Übermittlung von Ortungsdaten an ein externes Gerät.

Eine solche Übermittlungseinrichtung kann beispielsweise als Übermittlungseinrichtung bzw. Kommunikationseinrichtung ausgebildet sein, die entkoppelt von einer durch einen Bediener hervorgerufenen manuellen Aktivierung in einen aktiven Betrieb überführt wird, beispielsweise "always on" ist. Es ist jedoch auch denkbar, dass die Übermittlungseinrichtung in zumindest einem Verfahrensschritt manuell von einem Bediener aktivierbar ist. Weiterhin kann die Übermittlungseinrichtung als WLAN-Übermittlungseinrichtung, als Bluetooth-Übermittlungseinrichtung, als Funk-Übermittlungseinrichtung, als RFID-Übermittlungseinrichtung, als NFC-Übermittlungseinrichtung, als Infrarot-Übermittlungseinrichtung, als Mobilfunknetz-Übermittlungseinrichtung, als ZIGBEE-Übermittlungseinrichtung oder dergleichen ausgebildet sein. Zusätzlich zu einer drahtlosen Übermittlung von Ortungsdaten kann die Übermittlungseinrichtung auch zur drahtgebundenen Übermittlung von Ortungsdaten an ein externes Gerät ausgebildet sein.

Das externe Gerät kann als Smartphone, als Personal-Computer, als Laptop, als Netbook, als Tablet, als Uhr, als elektronisches Armband oder als eine andere, einem Fachmann als sinnvoll erscheinende externe Einheit ausgebildet sein. Das externe Gerät bzw. die externe Einheit umfasst zumindest eine Ortungseinheit, die dazu ausgebildet ist, die von der Übermittlungseinrichtung empfangenen Ortungsdaten auszuwerten, um eine lokale und/oder globale Position eines mit dem Trackingsystem verbundenen Objekts zu erfassen.

Die Übermittlungseinrichtung ist in einem Gehäuse der Trackingvorrichtung aufgenommen, wobei das Gehäuse unterschiedlichste Formen, Abmessungen und Gehäusematerialien umfassen kann. Je nach Einsatzzweck kann das Gehäuse insbesondere auch als wasserdichtes Gehäuse ausgebildet sein. Das Gehäuse kann in bekannter Weise aus mehreren Gehäuseteilen zusammengesetzt sein, die lösbar oder unlösbar miteinander verbunden sind.

Erfindungswesentlich ist, dass das Gehäuse wenigstens eine Befestigungsausnehmung aufweist, die zur lösbaren Aufnahme eines Befestigungselements ausgebildet ist. Das Befestigungselement kann beispielsweise insbesondere eine Befestigungsschraube, einen Befestigungsniet oder dergleichen umfassen. Das Befestigungselement kann insbesondere geeignet sein, die Trackingvorrichtung unmittelbar an dem zu ortenden Objekt lösbar zu befestigen, beispielsweise indem eine Befestigungsschraube durch die Befestigungsausnehmung an dem Gehäuse der Trackingvorrichtung durchgeführt und in das zu ortende Objekt eingeschraubt wird.

Erfindungsgemäß weist das Trackingsystem weiterhin wenigstens eine Halteklammer auf, wobei die Halteklammer lösbar mit dem Gehäuse der Trackingvorrichtung verbindbar ist, und eine Verbindungskontur aufweist, die mit einer Gegenkontur eines mit dem Trackingsystem zu verbindenden Objekts eine formschlüssige Verbindung herzustellen vermag. Eine solche Halteklammer hat dabei den Vorteil, dass diese und insbesondere ihre Verbindungskontur maßgeschneidert auf eine Gegenkontur des zu ortenden Objekts ausgebildet sein kann, um eine sichere Befestigung der Halteklammer und der damit verbundenen Trackingvorrichtung bereitzustellen.

Die Halteklammer ist zumindest im Bereich der Verbindungskontur aus einem formstabilen Material, beispielsweise aus Kunststoff oder einem metallischen Werkstoff, hergestellt.

Weiterhin wird dadurch, dass die Halteklammer mit ihrer Verbindungskontur eine formschlüssige Verbindung mit der Gegenkontur des zu ortenden Objekts herstellt, die Möglichkeit geschaffen, die Trackingvorrichtung einfach, schnell und ohne zusätzliches Werkzeug an einem Objekt anzubringen.

Das zu ortende Objekt, an dem das Trackingsystem angebracht werden kann, weist als Gegenkontur beispielsweise eine spezifische Kante, einen Haltesteg, eine Aufnahme, eine Schulter oder dergleichen auf, mit der die Verbindungskontur der Halteklammer eine formschlüssige Verbindung herzustellen vermag.

Insbesondere kann dabei die Halteklammer eine solche Verbindungskontur aufweisen, die auf eine ohnehin an dem zu ortenden Objekt vorhandene Gegenkontur angepasst ist, so dass ein nachträgliches Anbringen eines Trackingsystems an einem zu ortenden Objekt möglich ist.

Durch die spezifische Ausgestaltung des Trackingsystems, bei dem die Trackingvorrichtung über ihr Gehäuse und ein mit dem Gehäuse verbindbares Befestigungselement direkt an dem zu ortenden Objekt lösbar befestigt werden kann, sowie das Vorsehen einer zusätzlichen Halteklammer, die ebenfalls über ein Befestigungselement mit dem Gehäuse der Trackingvorrichtung lösbar verbunden werden kann, ist es möglich, die Trackingvorrichtung an unterschiedlichen Objekten lösbar zu befestigen.

Während bekannte Trackingvorrichtungen üblicherweise ein schlichtes Gehäuse ohne Befestigungsmöglichkeiten oder mit nur einer einzigen Befestigungsmöglichkeit aufweisen, werden hierdurch unterschiedlichste Befestigungsmöglichkeiten bereitgestellt und damit der mögliche Einsatz nennenswert verbessert.

Gemäß einer Weiterbildung der Erfindung kann die Halteklammer mittels eines in der Befestigungsausnehmung des Gehäuses der Trackingvorrichtung aufgenommenen Befestigungselements lösbar mit dem Gehäuse verbindbar sein. Es ist also möglich, beispielsweise mit einer Schraube die Trackingvorrichtung direkt an dem zu ortenden Objekt zu befestigen, oder das Gehäuse der Trackingvorrichtung mit einer Schraube an der Halteklammer anzubringen, wobei die Halteklammer wiederum über eine formschlüssige Verbindung mit dem zu ortenden Objekt lösbar verbunden werden kann.

Selbstverständlich ist es jedoch auch denkbar, die Halteklammer auf andere Art und Weise lösbar mit dem Gehäuse der Trackingvorrichtung zu verbinden, beispielsweise über eine unmittelbar an der Halteklammer ausgebildete Rastkontur, Befestigungsvorsprünge, oder dergleichen, die wiederum eine Aufnahme des Gehäuses der Trackingvorrichtung durch einen formschlüssigen Eingriff mit diesem erreichen. Auch ist es grundsätzlich denkbar, dass das Gehäuse der Trackingvorrichtung an der Halteklammer aufgeklebt wird (stoffschlüssige Verbindung) oder dergleichen.

Gemäß einer Weiterbildung der Erfindung kann vorgesehen sein, dass das Gehäuse der Trackingvorrichtung wenigstens eine erste Befestigungsausnehmung zur Aufnahme eines Befestigungselements einer ersten Art und wenigstens eine zweite Befestigungsausnehmung zur Aufnahme eines Befestigungselements einer zweiten Art aufweist, wobei sich das Befestigungselement erster Art und das Befestigungselement zweiter Art im Hinblick auf ihre Abmessung, ihre Materialart und/oder die Art der bewirkten Befestigung unterscheiden. So kann beispielsweise vorgesehen sein, dass die erste Befestigungsausnehmung zur Aufnahme eines als Befestigungsschraube ausgebildeten Befestigungselements ausgebildet ist, während die wenigstens eine zweite Befestigungsausnehmung beispielsweise zur Aufnahme eines als Kabelbinder oder dergleichen ausgebildeten Befestigungselements ausgebildet ist. In diesem Fall unterscheiden sich die Befestigungselemente erster und zweiter Art sowohl im Hinblick auf ihre Abmessung als auch im Hinblick auf ihre Materialart und die Art der bewirkten Befestigung. Alternativ ist es aber auch denkbar, dass die Befestigungsausnehmung erster Art und die Befestigungsausnehmung zweiter Art sich einfach nur in ihrem Durchmesser unterscheiden und so unterschiedlich große Befestigungselemente (beispielsweise Schraubenbolzen oder dergleichen) aufgenommen werden können. Es ist auch denkbar, dass mehr als eine erste Befestigungsausnehmung und/oder mehr als eine zweite Befestigungsausnehmung, beispielsweise zwei, drei, vier oder mehr erste und/oder zweite Befestigungsausnehmungen vorgesehen sind.

Weiterhin kann vorgesehen sein, dass das Gehäuse der Trackingvorrichtung wenigstens eine dritte Befestigungsausnehmung aufweist. Diese kann insbesondere in der Art einer Nut ausgebildet sein, welche sich von einer Seitenfläche des Gehäuses in einer Längsrichtung erstreckt und in die erste und/oder zweite Befestigungsausnehmung mündet. Das Gehäuse kann eine Gehäusefläche aufweisen, die zur Befestigung an einem Objekt an diesem angelegt werden kann (sogenannte Anlagefläche). Die Nut ist an der Anlagefläche angebracht und erstreckt sich von einer an die Anlagefläche angrenzende Seitenfläche des Gehäuses (zu der hin sie nicht begrenzt ist) in der Art eines Kanals bis hin der ersten und/oder zweiten Befestigungsausnehmung, in welche sie mündet.

Diese Ausgestaltung ermöglicht es, dass ein Kabelbinder in der Nut an der Anlagefläche bis zu der entsprechenden ersten oder zweiten Befestigungsausnehmung geführt werden kann. Hierdurch wird eine spielfreie oder nahezu spielfreie Anlage der Anlagefläche des Gehäuses an dem zu ortenden Objekt auch bei der Verwendung von Befestigungselementen, wie einem Kabelbinder oder einem Band, erlaubt.

Die dritte Befestigungsausnehmung kann dabei insbesondere so geformt sein, dass sie im Bereich der Seitenfläche des Gehäuses ihre geringste Tiefe aufweist und im Übergangsbereich zu der ersten und/oder zweiten Befestigungsausnehmung ihre größte Tiefe. Die Tiefe der Nut bezeichnet damit ihre Erstreckung von der Anlagefläche des Gehäuses bis zum Nutgrund. Weiterhin kann die Tiefe der Nut linear zunehmend, progressiv zunehmend oder regressiv zunehmend ausgestaltet sein. Auch Mischformen sind denkbar. Die nutförmige dritte Befestigungsausnehmung ermöglicht es so, dass auch weniger flexible Befestigungselemente, die bei einer Umlenkung aus der ersten oder zweiten Befestigungsausnehmung keinen Knick, sondern einen Krümmungsradius aufweisen, innerhalb der dritten Befestigungsausnehmung geführt werden können, um eine spielfreie oder nahezu spielfreie Anlage der Anlagefläche des Gehäuses an dem zu ortenden Objekt zu ermöglichen.

Gemäß einer Weiterbildung der Erfindung kann alternativ oder zusätzlich vorgesehen sein, dass das Trackingsystem wenigstens eine erste Halteklammer mit einer ersten Verbindungskontur und wenigstens eine zweite Halteklammer mit einer zweiten Verbindungskontur aufweist, wobei sich die erste Verbindungskontur und die zweite Verbindungskontur im Hinblick auf die Konturform unterscheiden derart, dass die erste Verbindungskontur mit einer ersten Gegenkontur an dem zu ortenden Objekt formschlüssig verbindbar ist und die zweite Verbindungskontur mit einer zweiten Gegenkontur an dem zu ortenden Objekt formschlüssig verbindbar ist.

Es ist also möglich, dass das Trackingsystem ein Gehäuse und mehrere Halteklammern umfasst, wobei die Halteklammern gleichzeitig an dem Gehäuse der Trackingvorrichtung angebracht sein können oder jeweils nur eine der Halteklammern mit dem Gehäuse verbunden sein kann. Durch das Vorsehen unterschiedlicher Klammern mit unterschiedlichen Verbindungskonturen kann die Trackingvorrichtung bezüglich ihres möglichen Einsatzes bzw. der verbindbaren zu ortenden Objekte weiter erweitert werden.

Selbstverständlich ist es möglich, mehr als zwei Halteklammern mit zwei unterschiedlichen Verbindungskonturen vorzusehen.

In Kombination mit den vorstehenden Merkmalen oder unabhängig davon kann vorgesehen sein, dass die wenigstens eine Halteklammer zwei Haltestege umfasst, wobei wenigstens einer der Haltestege relativ zu dem anderen Haltesteg elastisch auslenkbar ist, und wobei wenigstens ein Haltesteg einen Vorsprung aufweist, der in der Art einer Rastklinke in formschlüssigen Eingriff mit der Gegenkontur des zu ortenden Objektes gebracht werden kann. Die spezifische Ausgestaltung des Vorsprungs an dem wenigstens einen Haltesteg ist dabei insbesondere von der Gegenkontur des zu ortenden Objekts abhängig.

Weiterhin betrifft die vorliegende Erfindung ein Behältersystem umfassend einen Behälter mit wenigstens einer Gegenkontur an einer Behälterwand, sowie wenigstens ein Trackingsystem mit den vorstehenden Merkmalen.

Der Behälter des erfindungsgemäßen Behältersystems bildet somit das zu ortende Objekt bzw. einen Teil des zu ortenden Objekts, wenn das Behältersystem neben dem Behälter und dem Trackingsystem noch weitere Komponenten aufweist. An dem Behälter kann an einer der Behälterwände im Außenbereich oder im Innenbereich eine Kontur vorgesehen sein, die die Funktion der Gegenkontur des zu ortenden Objekts übernimmt. Diese kann speziell zur Aufnahme bzw. formschlüssigen Verbindung mit der Verbindungskontur der Halteklammer des Trackingsystems ausgebildet sein oder eine ohnehin vorgesehene Kontur des Behälters umfassen.

Gemäß einer Ausführungsform der Erfindung kann die wenigstens eine Gegenkontur eine Aufnahme umfassen, in der die wenigstens eine Halteklammer in einem an dem Behälter befestigten Zustand des Trackingsystems zumindest abschnittsweise aufgenommen sein kann. Bei der Aufnahme kann es sich somit um eine Ausnehmung, eine gehäuseförmige Aufnahme, eine hülsenförmige Aufnahme oder dergleichen handeln, die es ermöglicht, zumindest abschnittsweise einen Teil der Halteklammer zu übergreifen, zu umgreifen oder aufzunehmen.

Gemäß einer denkbaren Ausgestaltungsvariante kann vorgesehen sein, dass die wenigstens eine Gegenkontur eine gehäuseförmige Aufnahme umfasst, in der das Trackingsystem vollständig aufgenommen sein kann, derart dass eine im aufgenommenen Zustand des Trackingsystems äußere Fläche des Trackingsystems mit einer benachbarten Fläche einer Behälterwand nahezu bündig abzuschließen vermag.

Ergänzend sei darauf hingewiesen, dass Begriffe, wie "umfassend" "aufweisen" oder "mit" keine anderen Merkmale oder Schritte ausschließen. Ferner schließen Begriffe "ein" oder "das", die auf einer Einzahl von Schritten oder Merkmalen hinweisen, keine Mehrzahl von Merkmalen oder Schritten aus und umgekehrt.

Weitere Merkmale und Vorteile der Erfindung ergeben sich aus der nachfolgenden Beschreibung eines Ausführungsbeispiels der Erfindung sowie aus den Unteransprüchen.

Die Erfindung ist nachfolgend unter Bezugnahme auf die beigefügten Figuren näher beschrieben. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne dass er hierfür erfinderisch tätig werden müsste.

Es zeigen schematisch:
Figuren 1a, 1b in Figur 1a ein erfindungsgemäßes Trackingsystem und in Figur 1b das erfindungsgemäße Trackingsystem gemäß Figur 1a, in einem an einem zu ortenden Objekt angebrachten Zustand;
Figur 2das erfindungsgemäße Trackingsystem gemäß Figuren 1a, 1b in zerlegter Darstellung;
Figur 3eine erfindungsgemäße Trackingvorrichtung des Trackingsystems gemäß Figuren 1a, 1b und Figur 2 in einer Draufsicht;
Figur 4die erfindungsgemäße Trackinvorrichtung gemäß Figur 3 in Kombination mit alternativen Befestigungsmitteln in isometrischer Ansicht;
Figuren 5a, 5b in einer Seitenansicht in Figur 5a ein erfindungsgemäßes Trackingsystem in Seitenansicht und in Figur 5b das erfindungsgemäße Trackingsystem gemäß Figur 5a, in einem an einem zu ortenden Objekt angebrachten Zustand; und
Figuren 6a, 6b in einer geschnittenen Seitenansicht in Figur 6a ein erfindungsgemäßes Trackingsystem und in Figur 6b das erfindungsgemäße Trackingsystem gemäß Figur 6a, in einem an einem zu ortenden Objekt angebrachten Zustand.

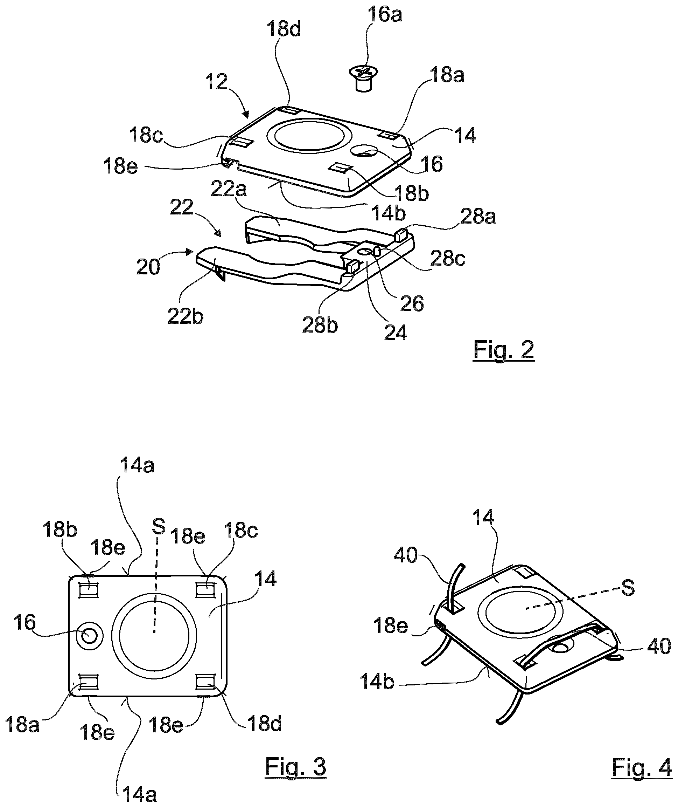

Die Figuren zeigen eine Ausführungsform eines erfindungsgemäßen Trackingsystems zur drahtlosen Ortung eines damit verbundenen Objektes O, das allgemein mit dem Bezugszeichen 10 bezeichnet ist. Das Trackingsystem 10 umfasst: eine Trackingvorrichtung 12 mit einem Gehäuse 14 zur Aufnahme einer Übermittlungseinrichtung (angedeutet durch das Bezugszeichen S in der Figur 3) zur drahtlosen Übermittlung von Ortungsdaten an ein externes Gerät (nicht dargestellt), wobei das Gehäuse 14 der Trackingvorrichtung 12 wenigstens eine Befestigungsausnehmung 16, 18a, 18b, 18c, 18d zur lösbaren Aufnahme eines Befestigungselements aufweist.

Weiterhin umfasst das erfindungsgemäße Trackingsystem 10 wenigstens eine Halteklammer 20, wobei die Halteklammer 20 lösbar mit dem Gehäuse 14 der Trackingvorrichtung 12 verbindbar ist und eine Verbindungskontur 22 aufweist, die mit einer Gegenkontur 32 eines mit dem Trackingsystem zu verbindenden Objektes O eine formschlüssige Verbindung herzustellen vermag. Auf diese Weise kann die Trackingvorrichtung 12 des Trackingsystems 10 zur drahtlosen Ortung des damit verbundenen Objektes O mittels der Halteklammer 20 an einem zu ortenden Objekt O lösbar befestigt werden

In der Figur 4 ist gezeigt, dass die Trackingvorrichtung zusätzlich auch mittels eines zusätzlichen Befestigungselements 40 (Fig. 4) mit einem ortenden Objekt O verbunden werden kann. In der gezeigten Ausführungsform sind zwei zusätzliche Befestigungselemente 40 vorgesehen, die in der Art eines Kabelbinders, eines Drahtes, Riemens oder einem anderen im wesentlichen längserstreckten flexiblen Befestigungselements an einem zu ortenden Objekt angebracht werden kann.

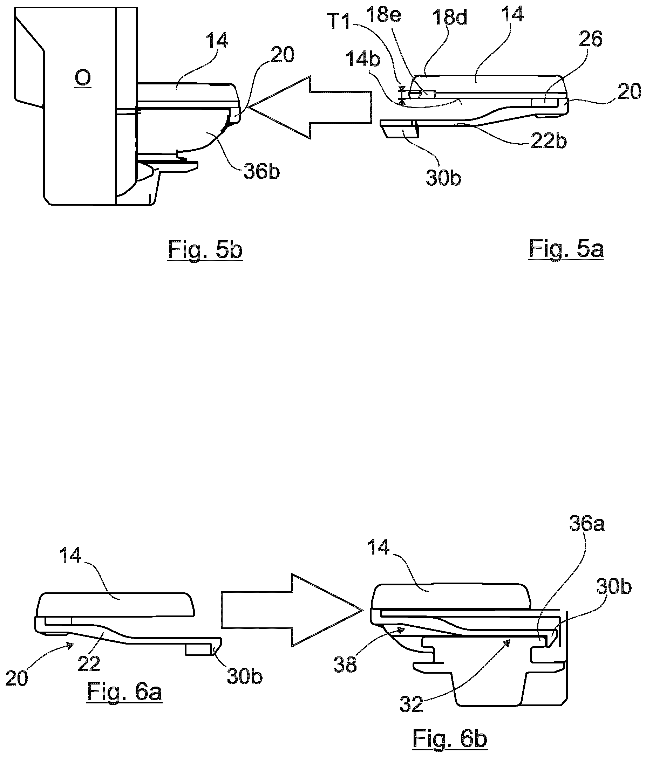

Wie in den Figuren 2, 3 und 4 sowie 5a angedeutet, kann das Gehäuse 14 der Trackingvorrichtung wenigstens eine dritte Befestigungsausnehmung 18e aufweisen. Diese kann wie gezeigt in der Art einer Nut ausgebildet sein, welche sich von einer Seitenfläche 14a des Gehäuses 14 in einer Längsrichtung erstreckt und in die erste und/oder zweite Befestigungsausnehmung 18a-d mündet. Dabei kann wenigstens eine dritte Befestigungsausnehmung 18e vorgesehen sein.

Besonders günstig ist aber, wenn jeder der zweiten Befestigungsausnehmungen eine dritte Befestigungsausnehmung zugeordnet ist, wie in Figur 3 angedeutet.

Das Gehäuse 14 weist eine Anlagefläche 14b auf, die zur Befestigung an einem Objekt an diesem angelegt werden kann. Die Nut bzw. dritte Befestigungsausnehmung 18e ist an der Anlagefläche 14b angebracht und erstreckt sich von einer an die Anlagefläche 14b angrenzende Seitenfläche 14a des Gehäuses 14 (zu der hin sie offen ist) in der Art eines Kanals bis hin zu der zugeordneten zweiten Befestigungsausnehmung 18a-d, in welche sie mündet.

Diese Ausgestaltung ermöglicht es, dass ein Kabelbinder 40 in der Nut an der Anlagefläche 14b bis zu der zugeordneten zweiten Befestigungsausnehmung 18a-d geführt werden kann. Hierdurch wird eine spielfreie oder nahezu spielfreie Anlage der Anlagefläche 14b des Gehäuses 14 an dem zu ortenden Objekt auch bei der Verwendung von bandförmigen Befestigungselementen 40, wie einem Kabelbinder, einer Schnur oder einem Band, erlaubt.

Die dritte Befestigungsausnehmung 18e kann dabei insbesondere so geformt sein, dass sie im Bereich der Seitenfläche des Gehäuses ihre geringste Tiefe T1 aufweist und im Übergangsbereich zu der ersten und/oder zweiten Befestigungsausnehmung ihre größte Tiefe. Die Tiefe der Nut bezeichnet damit ihre Erstreckung von der Anlagefläche des Gehäuses bis zum Nutgrund. Weiterhin kann die Tiefe der Nut linear zunehmend, progressiv zunehmend oder regressiv zunehmend ausgestaltet sein. Auch Mischformen sind denkbar. Die nutförmige dritte Befestigungsausnehmung ermöglicht es so, dass auch weniger flexible Befestigungselemente, die bei einer Umlenkung aus der ersten oder zweiten Befestigungsausnehmung geführt keinen Knick, sondern einen Krümmungsradius aufweisen, innerhalb der dritten Befestigungsausnehmung geführt werden können, um eine spielfreie oder nahezu spielfreie Anlage der Anlagefläche des Gehäuses an dem zu ortenden Objekt zu ermöglichen.

Weiterhin weist die Halteklammer 20 einen Anlageabschnitt 24 auf, an dem das Gehäuse 14 mit einer Seite, beispielsweise mit der Anlagefläche 14b, zur definierten Anlage gelangen kann.

Wie man weiter an den Figuren erkennen kann, ist die Halteklammer 20 mittels eines in der Befestigungsausnehmung 16 des Gehäuses 14 der Trackingvorrichtung 12 aufgenommenen Befestigungselements, insbesondere einer Schraube 16a lösbar mit dem Gehäuse 14 verbindbar ist. Hierzu ist beispielsweise, wie in der Figur 2 erkennbar, an der Halteklammer 20, insbesondere im Bereich des Anlageabschnitts 24, eine Aufnahmeöffnung 26 vorgesehen, in die die Schraube 16a eingeschraubt werden kann, wenn das Gehäuse 14 der Trackingvorrichtung 12 auf die Halteklammer 20, insbesondere auf den Anlageabschnitt 24, aufgesetzt ist. In diesem Zustand ist das Gehäuse 14 beispielsweise über zusätzliche Zentrierungsstrukturen in Form von Vorsprüngen 28a, 28b an der Halteklammer 20, insbesondere an dem Anlageabschnitt 24, ausgerichtet, derart, dass die Aufnahmeöffnung 26 mit der Befestigungsausnehmung 16 fluchtet. Eine von der abgewandten Seite des Gehäuses 14 in die Befestigungsausnehmung 16 aufgenommene Schraube S erstreckt sich durch diese in die Aufnahmeöffnung 26 und kann in ein darin vorgesehenes Innengewinde eingeschraubt werden. Alternativ kann auch eine selbstschneidende Schraube S verwendet werden, die in das Material der Halteklammer 20 im Bereich der Aufnahmeöffnung 26 eingeschraubt wird und sich im Zuge dessen einen Gewindegang einschneidet.

Die Halteklammer 20 kann vollständig oder abschnittsweise, beispielsweise im Bereich des Anlageabschnitts 24, aus Kunststoff oder dergleichen hergestellt sein.

Die zentrierenden Strukturen an der Halteklammer 20, insbesondere die beispielhaft gezeigten Vorsprünge 28a, 28b im Bereich des Anlageabschnitts 24 an der Halteklammer 20 sind beispielsweise derart ausgebildet und ausgerichtet , dass diese in ebenfalls vorhandene Gegenstrukturen an dem Gehäuse 14 eingreifen oder seitlich an dieses angelegt werden können, um das Gehäuse 14 an der Halteklammer 20 auszurichten. So stehen die gezeigten Vorsprünge 28a, 28b im Bereich des Anlageabschnitts 24 in Richtung zu einem hieran anlegbaren Gehäuse 14 derart vor, dass diese bei einer gewünschten Ausrichtung des Gehäuses 14 relativ zu dem Anlageabschnitt 24 in die Befestigungsausnehmungen 18a ,18b in zentrierender Weise einzugreifen vermögen.

So weist also das in den Figuren gezeigte Gehäuse 14 der Trackingvorrichtung 12 wenigstens eine erste Befestigungsausnehmung 16a zur Aufnahme eines Befestigungselements einer ersten Art, insbesondere einer Schraube S, und wenigstens eine zweite (in der gezeigten Ausführungsform vier) Befestigungsausnehmung(en) 18a bis d zur Aufnahme eines oder mehrerer Befestigungselemente (in der gezeigten Ausführungsform zwei) 40 einer zweiten Art, beispielsweise Kabelbinder oder dergleichen, auf, wobei sich das Befestigungselement erster Art, insbesondere die Schraube S, und das Befestigungselement zweiter Art, insbesondere die Kabelbinder, in Hinblick auf ihre Abmessungen, ihre Materialart und/oder die Art der bewirkten Befestigung unterscheiden.

Nicht gezeigt ist, dass das Trackingsystem wenigstens eine erste Halteklammer 20 mit einer ersten Verbindungskontur und wenigstens eine weitere Halteklammer mit einer alternativen Verbindungskontur aufweist, wobei sich die erste Verbindungskontur und die alternative Verbindungskontur in Hinblick auf die Konturform unterscheiden, derart dass die erste Verbindungskontur mit einer ersten Gegenkontur an dem zu ortenden Objekt formschlüssig verbindbar ist und die alternative Verbindungskontur mit einer zweiten von der ersten Gegenkontur abweichenden Gegenkontur an dem zu ortenden Objekt formschlüssig verbindbar ist.

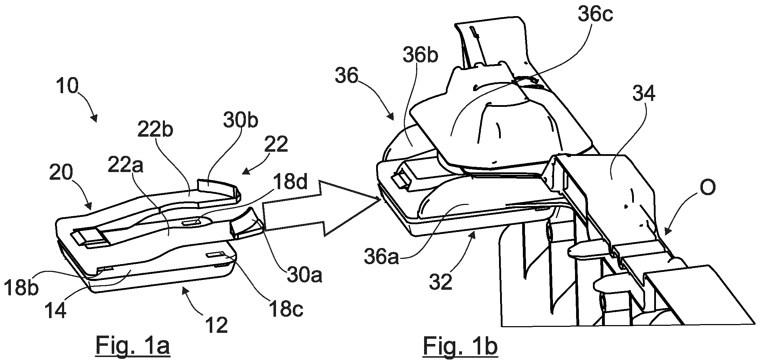

In den Figuren 1 und 2 erkennt man weiter, dass die wenigstens eine Halteklammer 20 weiterhin im Bereich Ihrer Verbindungskontur 22 zwei Haltestege 22a, 22b umfasst, wobei wenigstens einer der Haltestege 22a, 22b relativ zu dem anderen Haltesteg und/oder relativ zu dem Aufnahmeabschnitt 24 der Halteklammer 20 elastisch auslenkbar ist, und wobei optional wenigstens ein Haltesteg 22a, 22b einen Vorsprung 30a, 30b aufweist, der in der Art einer Rastklinke in formschlüssigen Eingriff mit der Gegenkontur 32 des zu ortenden Objektes O gebracht werden kann.

In den Figuren 1a und 1b, insbesondere dem Figurenteil Fig 1b, erkennt man, dass das zu ortende Objekt O einen Behälter eines Behältersystems (umfassend wenigstens einen Behälter) mit wenigstens einer Gegenkontur 32 an einer Behälterwand 34 umfassen kann. Das beispielhaft gezeigte Trackingsystem 10 kann, wie gezeigt, an dieser entsprechenden Gegenkontur 32 angebracht sein. Die Gegenkontur 32 ist in dem gezeigten Beispiel integral mit der Behälterwand 34 aus gebildet.

So umfasst in dem gezeigten Beispiel der Figuren 1a und 1b die wenigstens eine Gegenkontur eine Aufnahme 36, in der die wenigstens eine Halteklammer 20 in einem an dem Behälter befestigten Zustand des Trackingsystems 10 zumindest abschnittsweise aufgenommen sein kann.

In der gezeigten Ausführungsform wird die Aufnahme 36 durch Wandelemente 36a, 36b seitlich begrenzt. Zusätzlich ist wenigstens ein Vorsprung 36a, insbesondere an einer ober- oder unterseitigen Fläche 36c der Aufnahme 36 vorgesehen.

Die Halteklammer 20 greift mit den Haltestegen 22a, 22b in eine schmale Ausnehmung 38 und hintergreift in ihrer Endstellung relativ zu der Aufnahme 36 einen Vorsprung 36a. Der jeweilige Vorsprung 30a, 30b der Haltestege 22a, 22b wird in der Ausnehmung 38 geführt und leicht (in der gezeigten Ausgestaltung und Orientierung) nach oben, d.h. in Richtung zu dem Gehäuse 14, ausgelenkt und rastet in der Endstellung relativ zu der Aufnahme 36 zurück, um dort mit den Vorsprung 36a in formschlüssigen Eingriff zu gelangen.

Die wenigstens eine Gegenkontur 32 umfasst eine gehäuseförmige Aufnahme 36, in der das Trackingsystem 10 vollständig oder nahezu vollständig aufgenommen sein kann, derart, dass eine im aufgenommenen Zustand des Trackingsystems 10 äußere Fläche (beispielsweise die seitlichen Gehäuseflächen) des Trackingsystems 10 mit einer benachbarten Fläche (beispielsweise den Wandelementen 36a, 36b) einer Behälterwand 34 nahezu bündig abzuschließen vermag.

## Patentansprüche

1. Trackingsystem (10) zur drahtlosen Ortung eines damit verbundenen Objektes (O) mit:
einer Trackingvorrichtung (12) umfassend ein Gehäuse (14) zur Aufnahme einer Übermittlungseinrichtung (S) zur drahtlosen Übermittlung von Ortungsdaten an ein externes Gerät, wobei das Gehäuse (14) der Trackingvorrichtung (12) wenigstens eine Befestigungsausnehmung (16; 18a-d) zur lösbaren Aufnahme eines Befestigungselements (S, 40) aufweist, und
wenigstens einer Halteklammer (20), wobei die Halteklammer (20) lösbar mit dem Gehäuse (14) der Trackingvorrichtung (12) verbindbar ist und eine Verbindungskontur (22) aufweist, die mit einer Gegenkontur (32) eines mit dem Trackingsystem (10) zu verbindenden Objektes (O) eine formschlüssige Verbindung herzustellen vermag, derart, dass die Trackingvorrichtung (12) des Trackingsystems (10) zur drahtlosen Ortung des damit verbundenen Objektes (O) mittels der Halteklammer (20) oder mittels eines Befestigungselements (S, 40) an dem ortenden Objekt (O) lösbar befestigt werden kann.

2. Trackingsystem (10) nach Anspruch 1,
wobei die Halteklammer (20) mittels eines in der Befestigungsausnehmung (16) des Gehäuses (14) der Trackingvorrichtung (12) aufgenommenen Befestigungselements (S) lösbar mit dem Gehäuse (14) verbindbar ist.

3. Trackingsystem (10) nach Anspruch 1 oder 2,
wobei das Gehäuse (14) der Trackingvorrichtung (12) wenigstens eine erste Befestigungsausnehmung (16) zur Aufnahme eines Befestigungselements (S) einer ersten Art und wenigstens eine zweite Befestigungsausnehmung (18a-d) zur Aufnahme eines Befestigungselements (40) einer zweiten Art aufweist, wobei sich das Befestigungselement (S) erster Art und das Befestigungselement (40) zweiter Art in Hinblick auf ihre Abmessungen, ihre Materialart und/oder die Art der bewirkten Befestigung unterscheiden.

4. Trackingsystem (10) nach Anspruch 3,
wobei das Gehäuse (14) der Trackingvorrichtung (12) wenigstens eine dritte Befestigungsausnehmung (18e) aufweist, die in der Art einer Nut ausgebildet ist, welche sich von einer Seitenfläche (14a) des Gehäuses (14) erstreckt und in die erste und/oder zweite Befestigungsausnehmung (16; 18a-d) mündet.

5. Trackingsystem (10) nach Anspruch 4,
wobei die wenigstens eine dritte Befestigungsausnehmung (18e) im Bereich der Seitenfläche (14a) des Gehäuses (14) ihre geringste Tiefe (T1) aufweist und im Übergangsbereich zu der ersten und/oder zweiten Befestigungsausnehmung (16; 18a-d) ihre größte Tiefe

6. Trackingsystem nach einem der vorhergehenden Ansprüche,
wobei das Trackingsystem wenigstens eine erste Halteklammer mit einer ersten Verbindungskontur und wenigstens eine zweite Halteklammer mit einer zweiten Verbindungskontur aufweist, wobei sich die erste Verbindungskontur und die zweite Verbindungskontur in Hinblick auf die Konturform unterscheiden, derart dass die erste Verbindungskontur mit einer ersten Gegenkontur an dem zu ortenden Objekt formschlüssig verbindbar ist und die zweite Verbindungskontur mit einer zweiten Gegenkontur an dem zu ortenden Objekt formschlüssig verbindbar ist.

7. Trackingsystem (10) nach einem der vorhergehenden Ansprüche,
wobei die wenigstens eine Halteklammer (20) zwei Haltestege (22a, 22b) umfasst, wobei wenigstens einer der Haltestege (22a, 22b) relativ zu dem anderen Haltesteg (22a, 22b) und/oder relativ zu einem weiteren Abschnitt der Halteklammer (20) elastisch auslenkbar ist, und wobei wenigstens ein Haltesteg (22a, 22b) einen Vorsprung (30a, 30b) aufweist, der in der Art einer Rastklinke in formschlüssigen Eingriff mit der Gegenkontur des zu ortenden Objektes (O) gebracht werden kann.

8. Behältersystem umfassend einen Behälter mit wenigstens einer Gegenkontur (32) an einer Behälterwand (34), sowie wenigstens ein Trackingsystem (10) nach einem der Ansprüche 1 bis 7.

9. Behältersystem nach Anspruch 8,
wobei die wenigstens eine Gegenkontur (32) eine Aufnahme (36) umfasst, in der die wenigstens eine Halteklammer (20) in einem an dem Behälter befestigten Zustand des Trackingsystems (10) zumindest abschnittsweise aufgenommen sein kann.

10. Behältersystem nach Anspruch 8 oder 9,
wobei die wenigstens eine Gegenkontur (32) eine gehäuseförmige Aufnahme (36) umfasst, in der das Trackingsystem (10) nahezu vollständig aufgenommen sein kann, derart, dass eine im aufgenommenen Zustand des Trackingsystems (10) äußere Fläche des Trackingsystems (10) mit einer benachbarten Fläche einer Behälterwand nahezu bündig abzuschließen vermag.
